# EUROPÄISCHE PATENTSCHRIFT

(11) **EP 2 976 182 B1**
(45) Veröffentlichungstag und Bekanntmachung des Hinweises auf die Patenterteilung: **21.12.2016**
(21) Anmeldenummer: 14719247.0
(22) Anmeldetag: 19.03.2014
(51) Int. Cl.: B23Q 1/76

(54) **VORRICHTUNG ZUR WERKSTÜCKZENTRIERUNG**
DEVICE FOR CENTRING WORKPIECES
DISPOSITIF DE CENTRAGE DE PIÈCE

(30) Priorität: 20.03.2013 EP 13001443; 05.09.2013 EP 13183204
(43) Veröffentlichungstag der Anmeldung: 27.01.2016
(73) Patentinhaber: Rollomatic S.A., 2525 Le Landeron (CH)
(72) Erfinder: PAHUD, Pierre, CH-2520 La Neuveville (CH); KRUMM, Christian, CH-2607 Cortébert (CH)
(74) Vertreter: Geitz Truckenmüller Lucht
(86) Internationale Anmeldenummer: PCT/EP2014/055558
(87) Internationale Veröffentlichungsnummer: WO 2014/147157

(56) Entgegenhaltungen:
- DE-C- 721 402
- US-A- 2 769 466
- US-B1- 6 799 494

## Beschreibung

Die Erfindung geht aus von einer Vorrichtung zur Werkstückzentrierung eines an einer Spindel angeordneten Werkstücks.

Werkzeugmaschinen sind im Allgemeinen mit einer Spindel ausgestattet, an der ein zu bearbeitendes, meist zylindrisches Werkstück angeordnet wird. Die Anordnung des Werkstücks erfolgt in einer Werkstückschnittstelle der Spindel. An der Werkstückschnittstelle wird das Werkstück eingespannt. Zur Bearbeitung des Werkstücks mit einem Werkzeug wird das Werkstück durch die Spindel rotiert. Zu einer derartigen Bearbeitung zählt beispielsweise eine spanende Präzisionsbearbeitung oder Schleifen. Um ein Bearbeitung des Werkstücks mit hoher Genauigkeit zu ermöglichen, muss das Werkstück relativ zur Spindel zentriert werden. Dabei werden die Rotationsachse der Spindel und die Längsachse des Werkstücks zur Deckung gebracht. Hierdurch wird eine Unwucht oder eine Taumelbewegung des Werkstücks beim Rotieren vermieden. Die Werkstückschnittstelle muss eine hohe Wiederhohlgenauigkeit beim Zentrieren aufweisen. Dies bedeutet, dass beim Wechseln eines Werkstücks stets die gleiche hohe Genauigkeit beim Zentrieren erreicht wird. Hierzu werden Vorrichtungen zum Spannen und zur Werkstückzentrierung eingesetzt.

Zum Abstützen langer Werkstücke beim Drehen sind Lünetten bekannt, die im Englischen Sprachgebrauch als Steady Rests bezeichnet werden. Derartige Vorrichtungen dienen dazu, ein Durchbiegen längerer Werkstücke bei der Bearbeitung zu verhindern. Diese Vorrichtungen weisen drei oder mehr Auflagen auf, die bezogen auf die Drehachse der Spindel in radialer Richtung auf das Werkstück eine Kraft ausüben und von verschiedenen Seiten an dem Werkstück angreifen, insbesondere von unten, oben und den Seiten. Sie sind bevorzugt in gleichen Winkelabständen über einen Vollkreis verteilt, wobei sich das Werkstück im Zentrum des Vollkreises befindet. Dabei ist der Vollkreis Teil einer zur Drehachse der Spindel senkrechten Ebene. Die Position der Verschleißauflagen ist einstellbar.

Die US 2,769,466 A offenbart eine Holzdrehbank mit einer zusätzlichen Stützeinrichtung für ein an der Holzdrehbank zu bearbeitendes Werkstück. Dabei dient die Stützeinrichtung dazu, ein an der Holzdrehbank mit seinen Enden eingespanntes Werkstück zusätzlich in einem dritten Abschnitt zwischen seinen Enden abzustützen. Die Position der Stützeinrichtung ist einstellbar. Die Stützeinrichtung umfasst eine Platte mit einer Öffnung für das Werkstück. An der Platte sind vier Halterungen angeordnet. Jede der Halterungen ist mit einer drehbaren Rolle ausgestattet. Die Position der Halterungen ist an der Platte einstellbar, so dass die Rollen das Werkstück von vier verschiedenen Seiten unterstützten.

Darüber hinaus sind zur Werkstückzentrierung Auflagen bekannt, die als Halbmond oder V-Block bezeichnet werden. Sie weisen eine Vertiefung auf, die sich in einer Längsrichtung erstreckt. Die Vertiefung ist nach einer Seite offen und im Querschnitt halbkreisförmig oder dreieckig. Das Werkstück liegt im Bereich der Vertiefung an der Auflage an und wird durch diese positioniert.

Um das Werkstück relativ zur Rotationsachse der Spindel zu zentrieren, werden die bekannten Vorrichtungen senkrecht zur Rotationsachse der Spindel bewegt, und zwar in Richtung einer x-Achse und einer dazu senkrechten y-Achse. x-und y-Achse sind dabei senkrecht zur Rotationsachse der Spindel. Darüber hinaus können die Vorrichtungen in der Regel parallel zur Rotationsachse der Spindel verschoben werden. Dies entspricht einer Bewegung in Richtung einer z-Achse, welche sowohl zu der x-Achse als auch zu der y-Achse senkrecht ist.

Als nachteilig erweist sich dabei, dass mit den bekannten Vorrichtungen zwar eine Auflage für das Werkstück senkrecht zur Rotationsachse der Spindel bewegt und ein Versatz des Werkstücks parallel zur Rotationsachse der Spindel kompensiert werden kann. Es ist jedoch nicht möglich, gleichzeitig die Orientierung der Auflage relativ zur Rotationsachse der Spindel zu ändern.

Der Erfindung liegt die Aufgabe zugrunde, eine Vorrichtung zur Werkstückzentrierung zur Verfügung zu stellen, die eine verbesserte Einstellung der Position von Werkstücken relativ zu einer Rotationsachse der Spindel mit hoher Wiederholgenauigkeit ermöglicht, wobei nicht nur eine Parallelverschiebung in zueinander senkrechte Richtungen stattfinden soll sondern auch ein Verkippen einer Aufnahme für das Werkstück.

Diese Aufgabe wird durch eine Vorrichtung mit den Merkmalen des Anspruchs 1 gelöst. Die Vorrichtung weist ein erstes Stützelement, ein zweites Stützelement und einen die beiden Stützelemente abstützenden Stützkörper auf. Das erste Stützelement und das zweite Stützelement bilden gemeinsam eine Abstützung für das Werkstück oder für ein das Werkstück aufnehmendes zusätzliches Werkstückaufnahmeteil. Wird das Werkstück oder ein das Werkstück aufnehmendes Werkstückaufnahmeteil von unten durch die Stützelemente unterstützt, so bilden die Stützelemente eine Auflage. Die Stützelemente können jedoch auch von der Seite oder von oben ein Werkstück oder ein Werkstückaufnahmeteil abstützen.

Die beiden Stützelemente stützen das Werkstück in verschiedene Richtungen ab, so dass das Werkstück oder ein zusätzliches Werkstückaufnahmeteil beim Anliegen an den Stützelementen von mehreren Seiten gestützt und seine Position in radialer Richtung bezogen auf die Spindelachse definiert wird.

Das erste und zweite Stützelement können symmetrisch zu einer vertikalen Symmetrieebene an dem Stützkörper angeordnet sein.

Der Stützkörper ist entlang einer Stützkörper-Achse linear verschiebbar. Dabei ist der Stützkörper derart ausrichtbar, dass die Stützkörper-Achse im wesentlichen parallel zu einer Rotationsachse der Spindel ist. Durch das Verschieben des Stützkörpers entlang der Stützkörper-Achse kann der Abstand des Stützkörpers zu der Spindel eingestellt werden. Rotationsachse der Spindel und Stützkörper-Achse sind dabei beispielsweise Teil einer gemeinsamen vertikalen Ebene.

Das erste Stützelement ist in eine erste Verschiebe-Richtung linear verschiebbar und um eine erste Drehachse drehbar an dem Stützkörper angeordnet. Das zweite Stützelement ist in eine von der ersten Verschiebe-Richtung verschiedene zweite Verschiebe-Richtung linear verschiebbar und um eine zweite Drehachse drehbar an dem Stützkörper angeordnet. Die beiden Stützelemente sind unabhängig voneinander. Ihre Positionen sind unabhängig voneinander einstellbar. Die erste Verschiebe-Richtung und die zweite Verschiebe-Richtung, in die das zweite Stützelement verschiebbar ist, spannen zwei Geraden auf, die sich unter einem Winkel von mehr als 0° und weniger als 180° schneiden. Bevorzugt schneiden sie sich unter einem Winkel von 90° +/-45°. Dies entspricht einem Winkelbereich von 45° bis 135°.

Der Winkel zwischen der ersten Rotationsachse und der Stützkörper-Achse ist größer als 0° und kleiner als 180°. Der Winkel zwischen der zweiten Rotationsachse und der Stützkörper-Achse ist ebenfalls größer als 0° und kleiner als 180°. Weder die erste Rotationsachse noch die zweite Rotationsachse sind parallel zu der Stützkörper-Achse.

Das erste Stützelement weist einen ersten länglichen Stützabschnitt auf, an welchem das Werkstück oder ein das Werkstück aufnehmendes Werkstückaufnahmeteil anliegt. Das zweite Stützelement weist einen zweiten länglichen Stützabschnitt auf, an welchem das Werkstück oder ein das Werkstück aufnehmendes Werkstückaufnahmeteil anliegt. Der erste Stützabschnitt ist damit der Abschnitt des ersten Stützelements, der einem anzuordnenden Werkstück oder Werkstückaufnahmeteil zugewandt ist. Entsprechend ist der zweite Stützabschnitt der Abschnitt des zweiten Stützelements, der einem anzuordnenden Werkstück oder Werkstückaufnahmeteil zugewandt ist. Vorteilhafterweise sind der erste Stützabschnitt und der zweite Stützabschnitt einander zugewandt. In einer Ausgangsstellung des ersten und zweiten Stützelements sind der erste Stützabschnitt und der zweite Stützabschnitt in ihrer Längsrichtung parallel zueinander und parallel zur Stützkörper-Achse ausgerichtet. Bezogen auf diese Ausgangsstellung haben der erste Stützabschnitt und der zweite Stützabschnitt in einer zur Stützkörper-Achse parallelen Richtung eine größere Ausdehnung als in einer zur Stützkörper-Achse senkrechten Richtung.

Ist der Stützkörper mit seiner Stützkörper-Achse parallel zu einer Rotationsachse einer Spindel angeordnet, so bilden die Stützabschnitte der beiden Stützkörper eine Abstützung eines an der Spindel angeordneten Werkstücks in axialer Richtung des Werkstücks bezogen auf die Rotationsachse der Spindel. Das Werkstück wird damit nicht wie bei den aus dem Stand der Technik bekannten Vorrichtungen punktuell abgestützt sondern über eine gewisse Distanz in axialer Richtung, die der Länge der Stützabschnitte in ihrer Längsrichtung entspricht. Vorteilhafterweise wird das Werkstück oder ein Werkstückaufnahmekörper über die gleiche axiale Distanz durch den ersten und den zweiten Stützabschnitt abgestützt. Vorteilhafterweise erfolgt die Abstützung durch das erste und zweite Stützelement über eine Distanz in axialer Richtung, die im Verhältnis zu dem Durchmesser des Werkstücks steht. Bevorzugt ist ein Verhältnis von Durchmesser des Werkstücks zu Länge der beiden Stützabschnitte in ihrer Längsrichtung zwischen 1 zu 1 und 1 zu 4. Besonders bevorzugt ist ein Verhältnis von im wesentlichen 1 zu 3.

Vorteilhafterweise sind die beiden Stützabschnitte in ihrer Längsrichtung gleich lang.

Vorteilhafterweise befinden sich der erste und der zweite Stützabschnitt in Richtung der Stützkörper-Achse im wesentlichen auf gleicher Höhe. Sie sind nicht versetzt zueinander.

In vorteilhafter Weise schneiden sich die Gerade der ersten Verschiebe-Richtung und die Gerade der zweiten Verschiebe-Richtung in einem Punkt, der bei einem an einer Spindel angeordneten Stützkörper auf der Rotationsachse der Spindel liegt.

Durch das Verschieben des ersten Stützelements in der ersten Verschiebe-Richtung und das Verschieben des zweiten Stützelements in der zweiten Verschiebe-Richtung wird der Abstand zwischen dem ersten Stützabschnitt und der Rotationsachse der Spindel und zwischen dem zweiten Stützabschnitt und der Rotationsachse der Spindel so eingestellt, dass ein an der Spindel angeordnetes Werkstück an dem ersten und zweiten Stützabschnitt anliegt und von diesen abgestützt wird.

Durch eine Rotation des ersten Stützelements um die erste Drehachse wird die Ausrichtung des ersten Stützabschnitts in seiner Längsrichtung an die Ausrichtung des an der Spindel angeordneten Werkstücks oder Werkstückaufnahmekörpers derart angepasst, dass der erste Stützabschnitt in Längsrichtung parallel zum Werkstück ist, und das Werkstück entlang der Längsrichtung des ersten Stützabschnitts an dem ersten Stützabschnitt anliegt. Entsprechendes gilt für eine Rotation des zweiten Stützelements um die zweite Drehachse. Dies führt dazu, dass das Werkstück nicht nur an einem Punkt von dem ersten und zweiten Stützelement abgestützt wird, sondern über eine gewisse Distanz in axialer Richtung. Die Auflagepunkte sind über eine Distanz in axialer Richtung verteilt.

Auf diese Weise kann nicht nur die Position eines Werkstücks im Bezug auf eine zur Rotationsachse der Spindel senkrechte x- und y-Achse eingestellt werden. Die Drehung der Stützelemente ermöglicht auch die Einstellung zweier Winkel und damit das Drehen oder Verkippen des Werkstücks und der Längsachse des Werkstücks, um das Werkstück relativ zu der Rotationsachse der Spindel auszurichten.

An den Stützabschnitten weist jedes der beiden Stützelemente eine Werkstückanlegefläche auf. Das Werkstück berührt die beiden Stützelemente an diesen Werkstückanlegeflächen. Ist ein zusätzliches Werkstückaufnahmeteil vorgesehen, so berührt das Werkstückaufnahmeteil die beiden Stützelemente an deren Werkstückanlegeflächen. In diesem Fall berührt das Werkstück die Stützelemente nicht direkt.

Die obigen Angaben sowie die im folgenden Text enthaltenen Angaben im Bezug auf Winkel zwischen der ersten Verschiebe-Richtung, der zweiten Verschiebe-Richtung, der ersten Drehachse, der zweiten Drehachse oder der Stützkörper-Achse beziehen sich entweder darauf, dass sich die zugehörigen Geraden schneiden oder dass es sich um windschiefe Geraden handelt. Bei windschiefen Geraden entspricht der Winkel demjenigen Winkel zweier Geraden, die zu den windschiefen Geraden parallel sind und durch einen Punkt gehen.

Nach einer vorteilhaften Ausgestaltung der Erfindung verlaufen die beiden Geraden, die die erste Verschiebe-Richtung und die zweite Verschiebe-Richtung wiedergeben, in einer Ebene, die senkrecht zur Stützkörper-Achse ist.

Nach einer weiteren vorteilhaften Ausgestaltung der Erfindung ist die erste Drehachse senkrecht zu der ersten Verschiebe-Richtung.

Nach einer weiteren vorteilhaften Ausgestaltung der Erfindung ist die zweite Drehachse senkrecht zu der zweiten Verschiebe-Richtung.

Nach einer weiteren vorteilhaften Ausgestaltung der Erfindung weist das erste Stützelement eine im wesentlichen ebene erste Werkstückanlegefläche und das zweite Stützelement eine im wesentlichen ebene zweite Werkstückanlegefläche auf. Die erste Werkstückanlegefläche ist Teil der Oberfläche des ersten Stützabschnitts. Die zweite Werkstückanlegefläche ist Teil der Oberfläche des zweiten Stützabschnitts. Der Winkel zwischen der ersten Werkstückanlegefläche und der zweiten Werkstückanlegefläche ist größer als 0° und kleiner als 180°. Die erste Stützelementauflagefläche kann eine durchgängige Fläche sein oder sich aus mehreren Flächenteilen zusammensetzen. Entsprechendes gilt für die zweite Stützelementauflagefläche. Das Werkstück liegt an der ersten und zweiten Werkstückanlegefläche an. Es berührt das erste und zweite Stützelement an der ersten und zweiten Werkstückanlegefläche. Bevorzugt ist der Winkel zwischen der ersten und zweiten Werkstückanlegefläche größer als 60° und kleiner als 120°. Besonders bevorzugt beträgt der Winkel im wesentlichen 90°.

Nach einer weiteren vorteilhaften Ausgestaltung der Erfindung weist der abstützende Körper eine erste Führung für das erste Stützelement auf. An dieser ersten Führung ist das erste Stützelement in die erste VerschiebeRichtung verschiebbar. Diese erste Verschiebe-Richtung definiert eine Gerade. In vorteilhafter Weise verläuft die erste Verschiebe-Richtung in einer zu der Stützkörper-Achse senkrechten Ebene.

Nach einer vorteilhaften Ausgestaltung der Erfindung weist der Stützkörper eine zweite Führung für das zweite Stützelement auf. An dieser zweiten Führung ist das zweite Stützelement in die zweite Verschiebe-Richtung verschiebbar. Diese zweite Verschiebe-Richtung definiert eine zweite Gerade. In vorteilhafter Weise verläuft die zweite Verschiebe-Richtung in einer zu der Stützkörper-Achse senkrechten Ebene.

Nach einer vorteilhaften Ausgestaltung der Erfindung beträgt der Winkel zwischen der ersten Verschiebe-Richtung und der zweiten Verschiebe-Richtung mehr als 0° und weniger als 180°. Die erste und zweite Verschiebe-Richtung sind nicht parallel. Bevorzugt beträgt der Winkel zwischen 60° und 120°. Besonders bevorzugt beträgt der Winkel im wesentlichen 90°.

Nach einer weiteren vorteilhaften Ausgestaltung der Erfindung sind die erste Gerade, die durch die erste Verschiebe-Richtung definiert wird, und die zweite Gerade, die durch die zweite Verschiebe-Richtung definiert wird, Teil einer Ebene, die senkrecht zu der Stützkörper-Achse ist.

Nach einer weiteren vorteilhaften Ausgestaltung der Erfindung sind die erste Führung und/ oder die zweite Führung als schiefe Ebene an dem Stützkörper ausgebildet. An dieser bewegt sich das erste und/ oder zweite Stützelement oder ein zusätzliches Bauteil, welches das erste und/ oder zweite Stützelement trägt, entlang in die erste bzw. zweite Verschiebe-Richtung. Diese Translationsbewegung erfolgt im wesentlichen die schiefe Ebene hinauf oder hinunter.

Nach einer weiteren vorteilhaften Ausgestaltung der Erfindung ist die erste Drehachse im wesentlichen senkrecht zu der ersten Führung des ersten Stützelements. Die erste Drehachse ist im wesentlichen senkrecht zu der ersten Verschiebe-Richtung, entlang der das erste Stützelement an der ersten Führung verschiebbar ist.

Nach einer weiteren vorteilhaften Ausgestaltung der Erfindung ist die zweite Drehachse im wesentlichen senkrecht zu der zweiten Führung des zweiten Stützelements. Die zweite Drehachse ist im wesentlichen senkrecht zu der zweiten Verschiebe-Richtung, entlang der das zweite Stützelement an der zweiten Führung verschiebbar ist. Die erste und zweite Drehachse verlaufen bevorzugt in einer Ebene und schneiden sich unter einem Winkel. Dieser entspricht beispielsweise dem Winkel, unter dem sich die erste und die zweite Führung insbesondere die Verschiebe-Richtungen der ersten und zweiten Führung schneiden. Die Ebene ist bevorzugt senkrecht zu der Stützkörper-Achse des abstützenden Körpers.

Nach einer weiteren vorteilhaften Ausgestaltung der Erfindung ist ein erster Schlitten vorgesehen, der an der ersten Führung verschiebbar in die erste Verschiebe-Richtung angeordnet ist. Das erste Stützelement ist gegenüber dem ersten Schlitten drehbar. Eine Bewegung des ersten Schlittens entlang der ersten Führung führt zu einer linearen Bewegung des ersten Stützelements in die erste Verschiebe-Richtung.

Nach einer weiteren vorteilhaften Ausgestaltung der Erfindung ist ein zweiter Schlitten vorgesehen, der an der zweiten Führung in die zweite Verschiebe-Richtung verschiebbar angeordnet ist. Das zweite Stützelement ist gegenüber dem zweiten Schlitten drehbar. Eine Bewegung des zweiten Schlittens entlang der zweiten Führung führt zu einer linearen Bewegung des zweiten Stützelements in die zweite Verschiebe-Richtung.

Nach einer weiteren vorteilhaften Ausgestaltung der Erfindung ist das erste Stützelement zumindest abschnittsweise als Schlitten ausgebildet, der entlang der ersten Führung verschiebbar angeordnet ist. Der erste Schlitten ist damit Teil des ersten Stützelements.

Nach einer weiteren vorteilhaften Ausgestaltung der Erfindung ist das zweite Stützelement zumindest abschnittsweise als Schlitten ausgebildet, der entlang der zweiten Führung verschiebbar angeordnet ist. Der zweite Schlitten ist damit Teil des zweiten Stützelements.

Nach einer weiteren vorteilhaften Ausgestaltung der Erfindung ist mindestens eine der beiden Führungen an einem Ende mit einer Führungsbegrenzung ausgestattet. An der Führungsbegrenzung ist eine Feder angeordnet. Der an der Führung angeordnete Schlitten stützt sich mittelbar oder unmittelbar an der Feder ab. Wird der Schlitten ausgehend von einer Ausgangsposition, bei der die Feder nicht ausgelenkt ist, entlang der Führung bewegt, so wird die Feder ausgelenkt. Die ausgelenkte Feder übt auf den Schlitten eine Kraft aus, die parallel zur Führung wirkt. Sie drängt den Schlitten zurück in seine Ausgangsstellung. Bei der Feder kann es sich beispielsweise um eine Schraubenfeder handeln. Anstelle einer mechanischen Feder kann auch eine pneumatische Feder oder ein pneumatischer Antrieb vorgesehen sein.

Nach einer weiteren vorteilhaften Ausgestaltung der Erfindung weist mindestens eines der beiden Stützelemente einen Absatz auf, mit dem es sich an dem ihm zugeordneten Schlitten an der der Führungsbegrenzung abgewandten Stirnseite abstützt.

Nach einer weiteren vorteilhaften Ausgestaltung der Erfindung ist der abstützende Körper mit mindestens einer Fixiereinrichtung ausgestattet. Mit der Fixiereinrichtung kann eine Position mindestens eines der beiden Stützelemente an dem Stützkörper arretiert oder fixiert werden. Es kann beispielsweise eine erste Fixiereinrichtung für das erste Stützelement und eine zweite Fixiereinrichtung für das zweite Stützelement vorgesehen sein.

Nach einer weiteren vorteilhaften Ausgestaltung der Erfindung ist die Fixiereinrichtung eine Klemmeinrichtung. Diese drückt das Stützelement in der fixierten Stellung gegen den abstützenden Körper und verspannt ihn mit diesem.

Nach einer weiteren vorteilhaften Ausgestaltung der Erfindung ist der Stützkörper spiegelsymmetrisch zu einer vertikalen Symmetrieebene. Die Stützkörper-Achse des abstützenden Körpers verläuft in der Symmetrieebene oder ist parallel zu der Symmetrieebene.

Nach einer weiteren vorteilhaften Ausgestaltung der Erfindung weist die Vorrichtung ein Werkstückpresselement auf, welches auf ein an dem ersten und zweiten Stützelement anliegendes Werkstück eine Kraft ausübt. Dieses Werkstückpresselement drückt ein Werkstück gegen das erste und zweite Stützelement. Das Werkstückpresselement kann auch als Clamping Finger bezeichnet werden.

Nach einer weiteren vorteilhaften Ausgestaltung der Erfindung ist die Vorrichtung mit einem Werkstückaufnahmeteil ausgestattet, welches an dem ersten und zweiten Stützelement anliegt. Das Werkstückaufnahmeteil weist eine längliche Vertiefung für das Werkstück auf. Die Vertiefung ist dabei bevorzugt parallel zur Spindelachse ausgerichtet. Hierzu wird das Werkstückaufnahmeteil bevorzugt derart an den Stützelementen angeordnet, dass die längliche Vertiefung parallel zu der Stützkörper-Achse ausgerichtet ist. Das Werkstückaufnahmeteil kann an den Stützelementen fixiert werden, beispielsweise mit der Fixiereinrichtung. Auf diese Weise bleibt die Position des Werkstückaufnahmeteils beim Austausch eines Werkstücks erhalten und muss nicht neu justiert werden. Weist das Werkstückaufnahmeteil im wesentlichen die Form eines halben Zylinders auf, so kann es auch als Half Moon bezeichnet werden.

Nach einer weiteren vorteilhaften Ausgestaltung der Erfindung verläuft die Vertiefung für das Werkstück in dem Werkstückaufnahmeteil im wesentlichen parallel zu der Stützkörper-Achse.

Nach einer weiteren vorteilhaften Ausgestaltung der Erfindung weist die Fixiereinrichtung einen das Werkstückaufnahmeteil gegen das erste und/ oder zweite Stützelement drückenden Abschnitt auf. Auf diese Weise kann das Werkstückaufnahmeteil in einer Position fixiert werden.

Weitere Vorteile und vorteilhafte Ausgestaltungen der Erfindung sind der nachfolgenden Beschreibung, der Zeichnung und den Ansprüchen entnehmbar.

### Zeichnung

In der Zeichnung sind sechs Ausführungsbeispiele einer Vorrichtung zur Werkstückzentrierung dargestellt. Es zeigen:
- Figur 1: Spindel mit Werkstück und mehreren Vorrichtungen zur Werkstückzentrierung in einer Seitenansicht,
- Figur 2: erstes Ausführungsbeispiel einer Vorrichtung zur Werkstückzentrierung in perspektivischer Ansicht,
- Figur 3: Vorrichtung zur Werkstückzentrierung gemäß Figur 2 in Schnittdarstellung,
- Figur 4: Vorrichtung gemäß Figur 2 in Explosionsdarstellung,
- Figur 5: erstes Stützelement der Vorrichtung gemäß Figur 2 in perspektivischer Ansicht,
- Figur 6: Vorrichtung gemäß Figur 2 mit Werkstück,
- Figur 7: zweites Ausführungsbeispiel einer Vorrichtung zur Werkstückzentrierung, Ansicht von vorne,
- Figur 8: Vorrichtung zur Werkstückzentrierung gemäß Figur 7 in perspektivischer Ansicht,
- Figur 9: drittes Ausführungsbeispiel einer Vorrichtung zur Werkstückzentrierung in einer perspektivischen Ansicht,
- Figur 10: Vorrichtung zur Werkstückzentrierung gemäß Figur 9 in Schnittdarstellung,
- Figur 11: Vorrichtung zur Werkstückzentrierung gemäß Figur 9 in Explosionsdarstellung,
- Figur 12: viertes Ausführungsbeispiel einer Vorrichtung zur Werkstückzentrierung in Explosionsdarstellung,
- Figur 13: fünftes Ausführungsbeispiel einer Vorrichtung zur Werkstückzentrierung in einer perspektivischen Ansicht,
- Figur 14: Vorrichtung zur Werkstückzentrierung gemäß Figur 13 in Schnittdarstellung,
- Figur 15: Vorrichtung zur Werkstückzentrierung gemäß Figur 13 in Explosionsdarstellung,
- Figur 16: sechstes Ausführungsbeispiel einer Vorrichtung zur Werkstückzentrierung in Explosionsdarstellung.

### Beschreibung der Ausführungsbeispiele

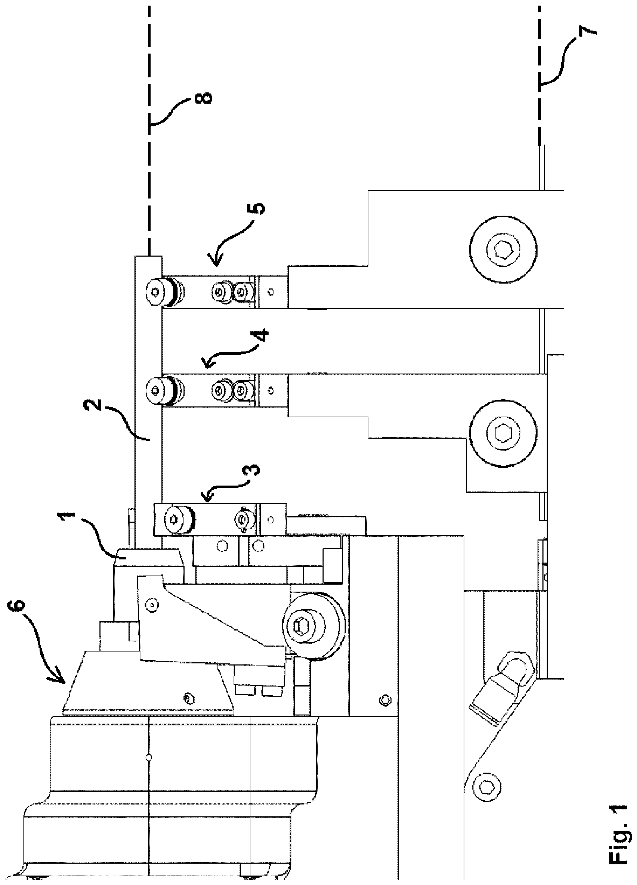

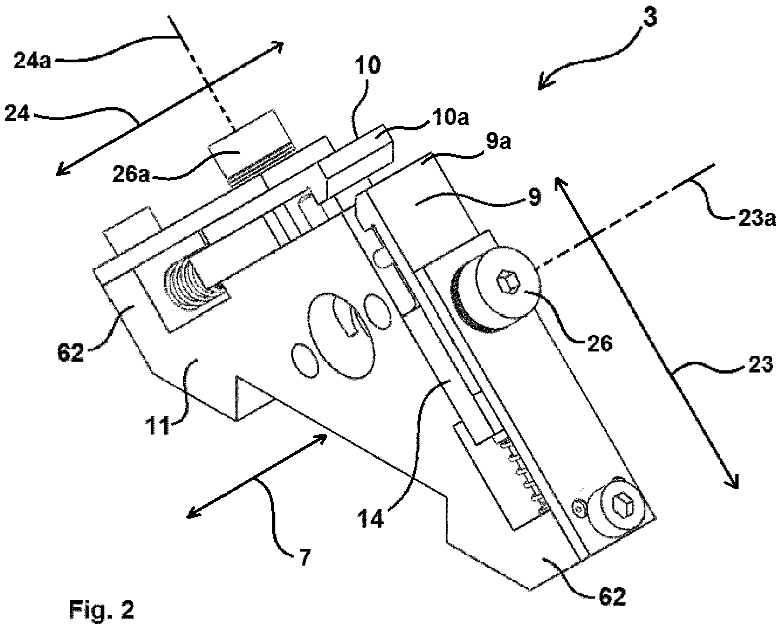

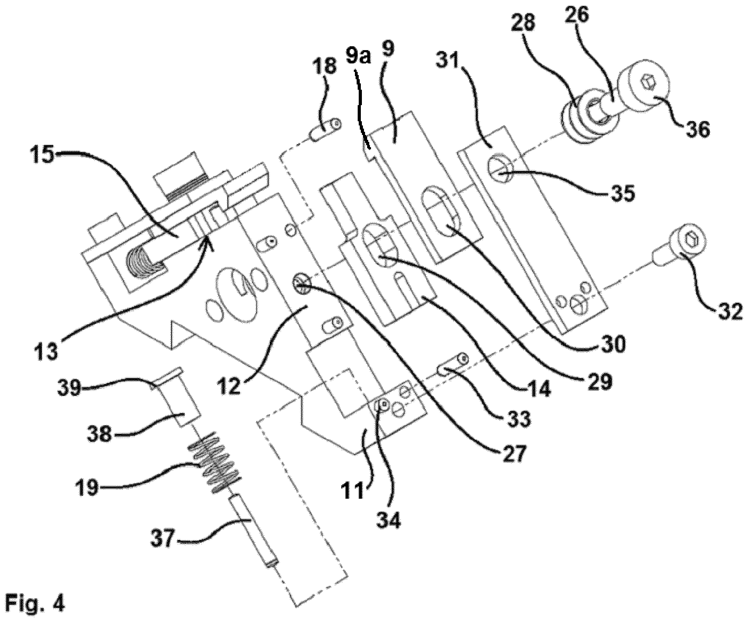

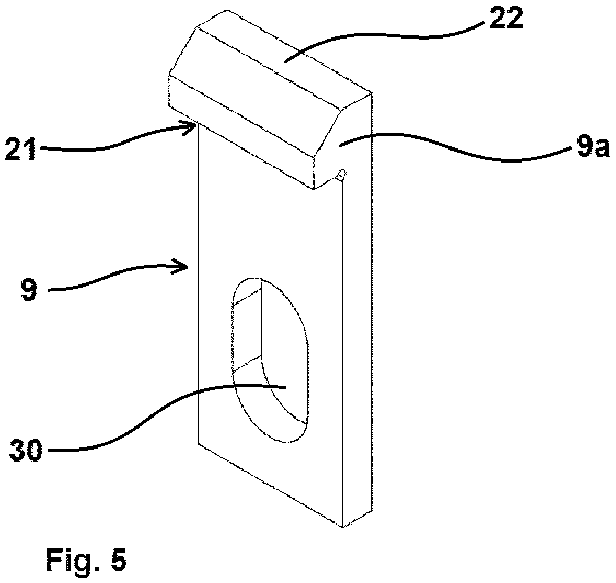

Figur 1 zeigt eine Spindel 1 mit einem Werkstück 2 und mehreren Vorrichtungen 3, 4, 5 zur Werkstückzentrierung. Die erste Vorrichtung 3 zur Werkstückzentrierung ist benachbart zu der Spanneinrichtung 6 der Spindel 1 angeordnet. Der Abstand zur Spindel ist nur in kleinem Umfang veränderbar. Die zweite Vorrichtung 4 und die dritte Vorrichtung 5 weisen einen größeren Abstand zu der Spanneinrichtung 6 auf. Sie sind entlang einer Stützkörper-Achse 7 verschiebbar. Alle drei Vorrichtungen 3, 4, 5 dienen dazu, die Längsachse des Werkstücks 2 mit der Rotationsachse 8 der Spindel 1 zur Deckung zu bringen. Die Stützkörper-Achse 7 ist im wesentlichen parallel zu der Rotationsachse 8 der Spindel. Die drei Vorrichtungen 3, 4 und 5 sind in den Figuren 2 bis 7 detaillierter dargestellt.

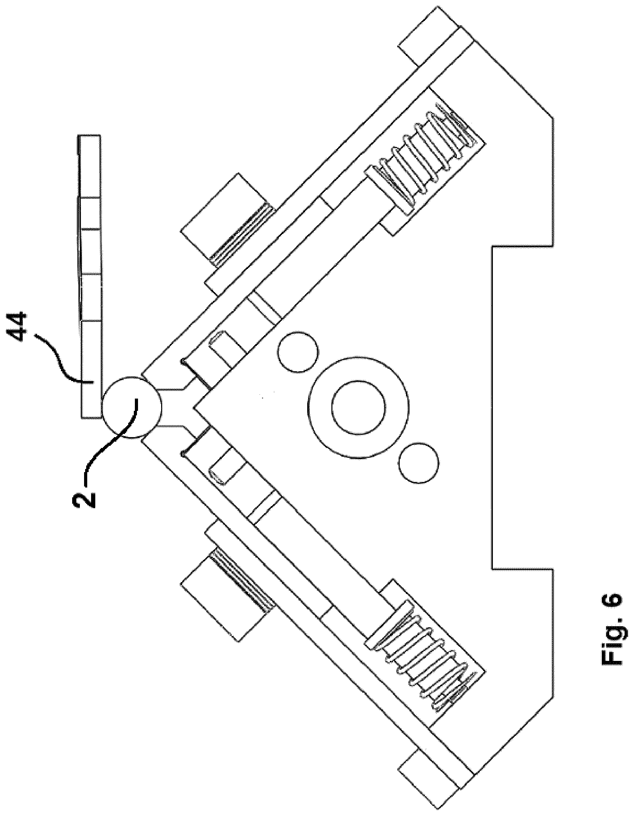

In den Figuren 2 bis 6 ist ein erstes Ausführungsbeispiel einer Vorrichtung 3 zur Zentrierung eines Werkstücks gezeigt. Das Werkstück ist in den Figuren 2 bis 5 nicht dargestellt. Es ist nur in Figur 6 erkennbar. Die Vorrichtung 3 weist ein erstes Stützelement 9, ein zweites Stützelement 10, einen die beiden Stützelemente 9, 10 abstützenden Stützkörper 11 mit einer ersten Führung 12 und einer zweiten Führung 13, einem ersten Schlitten 14, einem zweiten Schlitten 15, einer ersten Fixiereinrichtung 16 und einer zweiten Fixiereinrichtung 17 auf. Zwei der Oberflächen des Stützkörpers 11 sind als Führungen ausgebildet, und zwar als erste Führung 12 für den ersten Schlitten 14 und als zweite Führung 13 für den zweiten Schlitten 15. Die als Führungen ausgebildeten Oberflächen des Stützkörpers 11 sind ebene Flächen. Sie bilden jeweils eine schiefe Ebene, entlang der sich der erste Schlitten 14 und der zweite Schlitten 15 bewegen. Die auf der ersten und zweiten Führung aufliegende Oberfläche des ersten und zweiten Schlittens ist ebenfalls eine ebene Fläche. An den Führungen 12, 13 sind Führungsstifte 18 angeordnet. Sie sorgen für eine seitliche Führung der Schlitten 14, 15. Ein zentral angeordneter Stift begrenzt den Verschiebeweg der Schlitten 14, 15 an den Führungen 12, 13. Er sorgt ebenfalls für eine Führung. Die beiden Schlitten 14, 15 sind als flache Bauteile ausgebildet, die auf den Führungen 12, 13 nach oben und unten gleiten können. Sie können sich nur in eine Richtung vor und zurück bewegen.

Der Stützkörper ist mit Führungsbegrenzungen 62 ausgestattet. Jeder Führung 12, 13 ist eine Führungsbegrenzung 62 zugeordnet. An jeder der beiden Führungsbegrenzungen 62 ist einer Feder 19, 20 angeordnet. Die Federn sind mit einem Stift 37 und einer Hülse 38 an der zugehörigen Führungsbegrenzung befestigt. Mit ihrem unteren Ende stützen sich die beiden Schlitten 14, 15 an jeweils einer Feder 19, 20 ab. Das den Schlitten 14, 15 abgewandte Ende der Federn 19, 20 stützt sich an der zugehörigen Führungsbegrenzung 62 des Stützkörpers 11 ab. Werden die beiden Schlitten 14, 15 nach unten bewegt, so werden die Federn 19, 20 zusammengedrückt. Auf die Schlitten 14, 15 wirkt eine entsprechende Federkraft.

Das erste Stützelement 9 ist an dem ersten Schlitten 14 angeordnet. Es ist ebenfalls als flaches Bauteil ausgebildet und liegt zumindest abschnittsweise auf dem ersten Schlitten 14 auf. Das erste Stützelement 9 weist einen Absatz 21 auf, mit dem es sich an dem ersten Schlitten 14 abstützt. Der Absatz 21 liegt auf der der Feder 19 abgewandten Stirnseite des ersten Schlittens 14 auf.

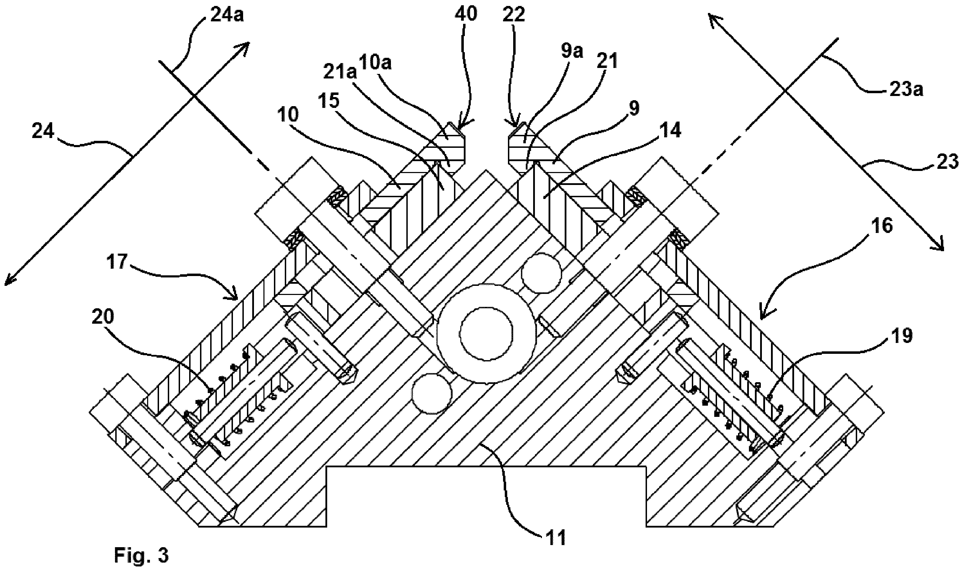

Der Absatz 21 trennt einen ersten Stützabschnitt 9a vom übrigen ersten Stützelement 9 ab. Der erste Stützabschnitt 9a ist länglich ausgebildet. Seine Längsrichtung ist in der in den Figuren 2 und 3 dargestellten Ausgangsposition des ersten Stützelements 9 parallel zur Stützkörper-Achse 7. An dem ersten Stützabschnitt 9a und einem entsprechenden zweiten Stützabschnitt 10a des zweiten Stützelements liegt ein Werkstück 2 an. Dies ist in Figur 6 dargestellt.

An der dem Absatz 21 abgewandten Seite des Stützabschnitts 9a befindet sich eine erste Werkstückanlegefläche 22 des ersten Stützelements 9. Diese ist Teil der Oberfläche des Stützabschnitts 9a. An der Werkstückanlegefläche berührt das Werkstück 2 das Stützelement 9. Die Werkstückanlegefläche 22 bildet dabei eine Tangentialebene im Bezug auf das Werkstück 2.

Das erste Stützelement 9 ist zusammen mit dem ersten Schlitten 14 entlang der ersten Führung 18 in die erste Verschiebe-Richtung 23 verschiebbar. Darüber hinaus ist das erste Stützelement 9 gegenüber dem ersten Schlitten 14 um eine erste Drehachse 23a drehbar. Die erste Drehachse 23a ist senkrecht zu der ersten Verschiebe-Richtung 23. Die erste Drehachse 23a wird durch eine Schraube 26 vorgegeben, die in einer Gewindebohrung 27 des abstützenden Körpers 11 gehalten ist. Der erste Schlitten 14 weist ein Langloch 29 auf, damit er relativ zu der Schraube 26 verschiebbar ist. Das erste Stützelement 9 weist ein Langloch 30 auf, damit es ebenfalls relativ zu der Schraube 26 verschiebbar ist. Darüber hinaus ist das erste Stützelement 9 relativ zu der Schraube 26 drehbar.

Die Schraube 26 hat noch eine zweite Funktion. Sie ist Teil der ersten Fixiereinrichtung 16. Diese weist ferner eine Blattfeder 31 auf, welche mit einem Ende an dem abstützenden Körper 11 mittels einer Schraube 32 und zwei Stiften 33, 34 fest eingespannt ist. Das andere Ende der Blattfeder 31 weist eine Durchgangsöffnung 35 auf, durch die die Schraube 26 hindurch geführt ist. Die Schraube 26 weist einen Schraubenkopf 36 und unmittelbar benachbart zu dem Schraubenkopf eine Feder 28 auf. Zum Einstellen der Position des ersten und zweiten Stützelements 9, 10 ist die Schraube 26 gelockert, so dass die Blattfeder 31 ausgelenkt werden kann. Zum Fixieren einer Position des ersten Stützelementes 9 wird die Schraube so weit in die Gewindebohrung 27 hinein gedreht, dass der Schraubenkopf 36 der Schraube 26 die Feder 28 zusammendrückt und die Blattfeder 31 gegen das erste Stützelement 9, den ersten Schlitten 14 und die erste Führung 12 des Stützkörpers 11 drückt. Dadurch wird das erste Stützelement 9 mit dem Stützkörper 11 verspannt.

Die Feder 19 ist über einen Stift 37 und eine auf den Stift 37 aufgesetzte Hülse 38 mit einem Hülsenkopf 39 an dem Stützkörper 11 gehalten.

Das zweite Stützelement 10 weist entsprechend zu dem ersten Stützelement 9 einen zweiten länglichen Stützabschnitt 10a auf. Dieser Abschnitt wird durch den Absatz 21 a vom übrigen zweiten Stützelement 10 abgetrennt. Die dem Absatz 21 a abgewandte Seite des zweiten Stützabschnitts 10a ist als zweite Werkstückanlegefläche 40 ausgebildet. In der in den Figuren 2 und 3 dargestellten Ausgangsposition des zweiten Stützelements 10 ist der zweite Stützabschnitt 10a mit seiner Längsrichtung parallel zur Stützkörper-Achse 7 ausgerichtet.

Das zweite Stützelement 10, die zweite Führung 13, der zweite Schlitten 15 und die zweite Fixiereinrichtung 17 sind genau gleich aufgebaut und weisen die gleichen Komponenten auf wie das erste Stützelement 9, die erste Führung 12, der erste Schlitten 14 und die erste Fixiereinrichtung 16. Die Vorrichtung ist diesbezüglich symmetrisch aufgebaut. Für die übereinstimmenden Komponenten werden in der Zeichnung zumindest teilweise die gleichen Bezugszahlen verwendet. Das zweite Stützelement ist entlang der zweiten Führung 13 in eine zweite Verschiebe-Richtung 24 verschiebbar und um eine zweite Drehachse 24a drehbar. Die zweite Drehachse 24a wird durch eine zweite Schraube 26a vorgegeben.

In Figur 6 ist die Vorrichtung 3 gemäß erstem Ausführungsbeispiel in einer Ansicht von vorne zusammen mit einem Werkstück 2 und einem Werkstückpresselement 44 dargestellt. Das Werkstückpresselement 44 übt eine Kraft auf das Werkstück 2 aus und drückt dieses gegen die Auflage, die durch das erste Stützelement 9 und das zweite Stützelement 10 gebildet wird. Dabei liegt das Werkstück 2 an der ersten Werkstückanlegefläche des ersten Stützelements 9 und an der zweiten Werkstückanlegefläche des zweiten Stützelements 10 an. Auf diese Weise wird das Werkstück 2 eingespannt. Die Kraft des Werkstück-presselements 44 wird zusammen mit der Gewichtskraft des Werkstücks 2 auf die beiden Stützelemente 9, 10 und die zugehörigen Schlitten 14, 15 übertragen. Um eine hohe Wiederholgenauigkeit der Position der Werkstücke zu garantieren, dürfen sich die Stützelemente 9, 10 und die zugehörigen Schlitten unter der Einwirkung der Kraft des Werkstückpresselements 44 und der Gewichtskraft eines Werkstücks 2 nicht bewegen.

Zur Einstellung des ersten und zweiten Stützelements 9, 10 und des ersten und zweiten Schlittens 14, 15 dient ein Referenz-Werkstück, welches im wesentlichen dem in der Zeichnung dargestellten Werkstück 2 entspricht. Die Stützelemente 9, 10 werden unter einem Winkel ausgerichtet, der der Position des Referenz-Werkstücks entspricht. Der erste und zweite Schlitten 14, 15 werden entsprechend nach unten bewegt. Die Federn 19, 20 werden zusammengedrückt. Die Federkraft dieser ausgelenkten Federn 19, 20 wirkt dem Referenz-Werkstück entgegen. Wenn sich die Kräfte gegenseitig aufheben, herrscht ein Kräftegleichgewicht. Die eingestellte Position des ersten Stützelements 9 und das zweiten Stützelements 10 wird mit den beiden Fixiereinrichtungen 16, 17 fixiert. Diese Einstellung der beiden Stützelemente 9, 10 und der Schlitten 14, 15 kann auch als Setup bezeichnet werden. Die Einstellung wird nur dann verändert, wenn andere Werkstücke mit unterschiedlicher Geometrie eingesetzt werden. Die fixierte Position der beiden Stützelemente 9, 10 wird für weitere Werkstücke genutzt, die anstelle des Referenz-Werkstücks auf die Spindel aufgesetzt werden.

Der Winkel zwischen der ersten Führung 12 und der zweiten Führung 13 beträgt bei dem ersten Ausführungsbeispiel 90°. Der Winkel der ersten Führung 12 gegen die Horizontale beträgt 45°. Der Winkel der zweiten Führung 13 gegen die Horizontale beträgt 45°. Die Vorrichtung 3 ist im wesentlichen spiegelsymmetrisch zu einer vertikalen Symmetrieebene aufgebaut.

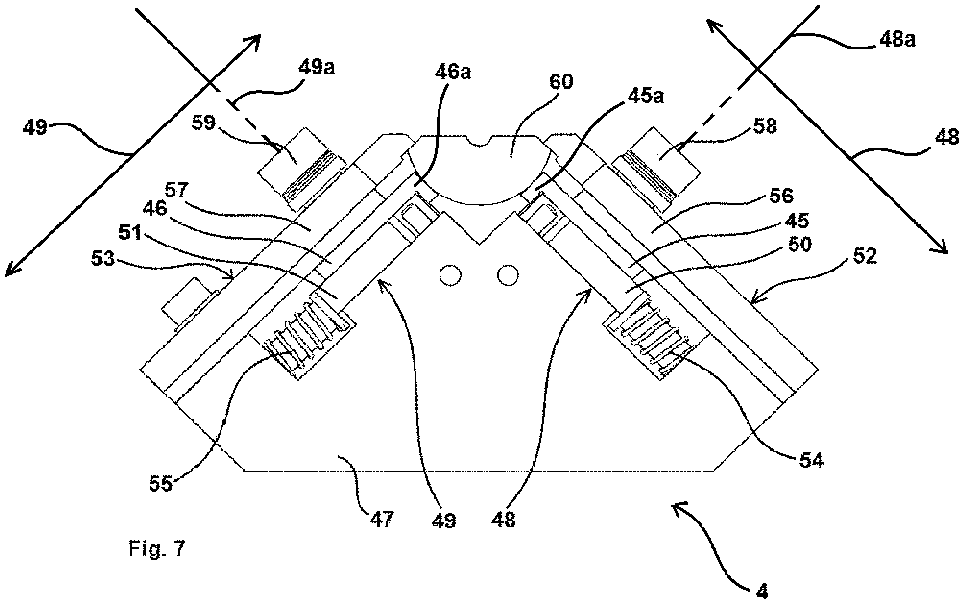

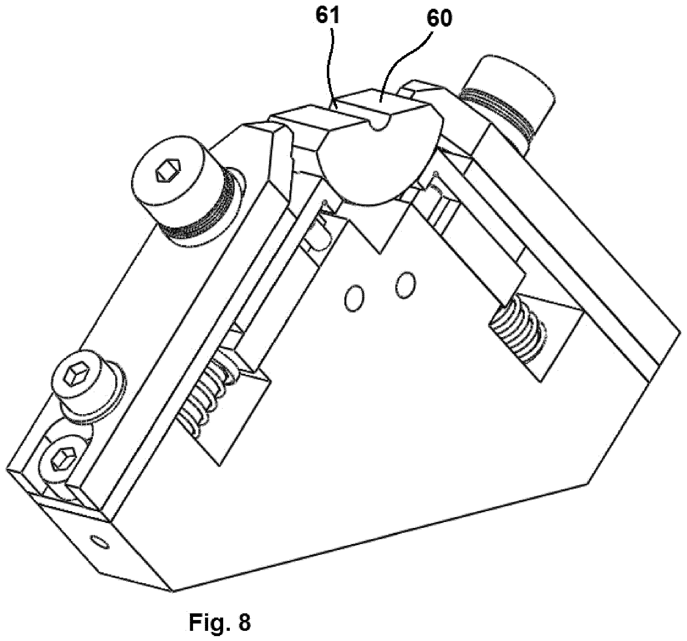

In den Figuren 7 und 8 ist ein zweites Ausführungsbeispiel einer Vorrichtung 4 zur Werkstückzentrierung dargestellt. Es handelt sich hierbei um ein Ausführungsbeispiel, das der zweiten und dritten Vorrichtung in Figur 1 entspricht.

Der Aufbau ist im wesentlichen identisch wie beim ersten Ausführungsbeispiel. Die Vorrichtung weist ebenfalls ein erstes Stützelement 45 mit einem ersten Stützabschnitt 45a, ein zweites Stützelement 46 mit einem zweiten Stützabschnitt 46a, einen die beiden Stützelemente 45, 46 abstützenden Stützkörper 47 mit einer ersten als schiefe Ebene ausgebildeten Führung und einer zweiten als schiefe Ebene ausgebildeten Führung, einem ersten Schlitten 50, einem zweiten Schlitten 51, einer ersten Fixiereinrichtung 52 und einer zweiten Fixiereinrichtung 53 auf. Der erste Stützabschnitt 45a ist zum übrigen ersten Stützelement senkrecht ausgerichtet. Der zweite Stützabschnitt 46a ist zum übrigen zweiten Stützelement senkrecht ausgerichtet. Das erste Stützelement 45 ist dank der Führung entlang der ersten Verschiebe-Richtung 48 verschiebbar und um eine erste Drehachse 48a drehbar. Das zweite Stützelement 46 ist dank der Führung entlang der zweiten Verschiebe-Richtung 49 verschiebbar und um eine zweite Drehachse 49a drehbar. Der Stützkörper 47 weist ebenfalls eine im wesentlichen dreieckige Form auf. Die Schlittenführung mit Federn 54, 55 und die Fixiereinrichtung mit Blattfedern 56, 57 und Schrauben 58, 59 ist im wesentlichen entsprechend zu dem ersten Ausführungsbeispiel gemäß Figuren 2 bis 6 aufgebaut. Es bestehen zwei prinzipielle Unterschiede zu dem ersten Ausführungsbeispiel:

Es ist ein Werkstückaufnahmeteil 60 mit einer zylindrischen Vertiefung 61 für ein Werkstück vorgesehen. Die Vertiefung 61 ist als längliche Mulde ausgebildet. Sie reicht von einer Stirnseite des Werkstückaufnahmeteils bis zur anderen Stirnseite. Das Werkstückaufnahmeteil 60 weist im wesentlichen die Form einen halben Kreiszylinders auf. Die nach unten weisende Oberfläche ist rund. An den Seiten ist das Werkstückaufnahmeteil abgeschrägt. Das Werkstückaufnahmeteil liegt auf dem ersten Stützelement 45 und dem zweiten Stützelement 46 auf.

Der zweite Unterschied zu dem ersten Ausführungsbeispiel besteht darin, dass die Blattfedern 56, 57 der Fixiereinrichtungen 52, 53 an ihrem dem fest eingespannten Ende abgewandten Ende spitz zulaufen und bis zu dem Werkstückaufnahmeteil 60 reichen. Da das Werkstückaufnahmeteil 60 an den den spitz zulaufenden Enden der Blattfedern 56, 57 zugewandten Seiten abgeflacht ist und die Blattfedern bis zu den abgeflachten Seiten reichen, kann mit den Blattfedern nicht nur die Position der Stützelemente 45, 46 fixiert werden sondern auch die Position des Werkstückaufnahmeteils 60. Die Blattfedern drücken von beiden Seiten gegen das Werkstückaufnahmeteil 60.

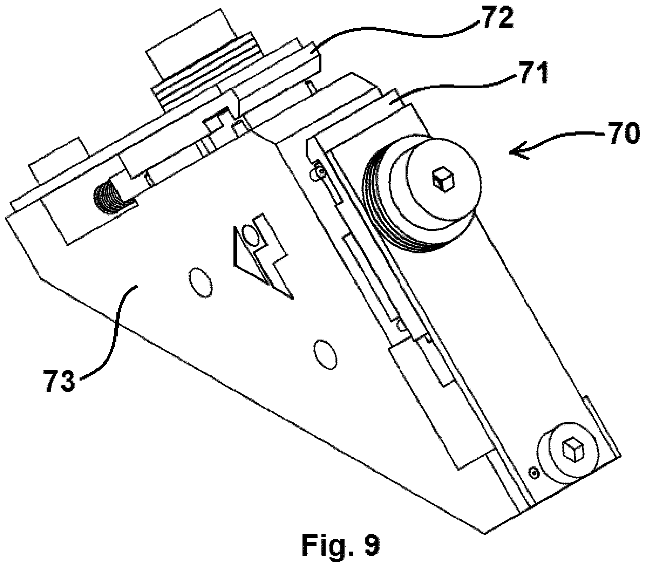

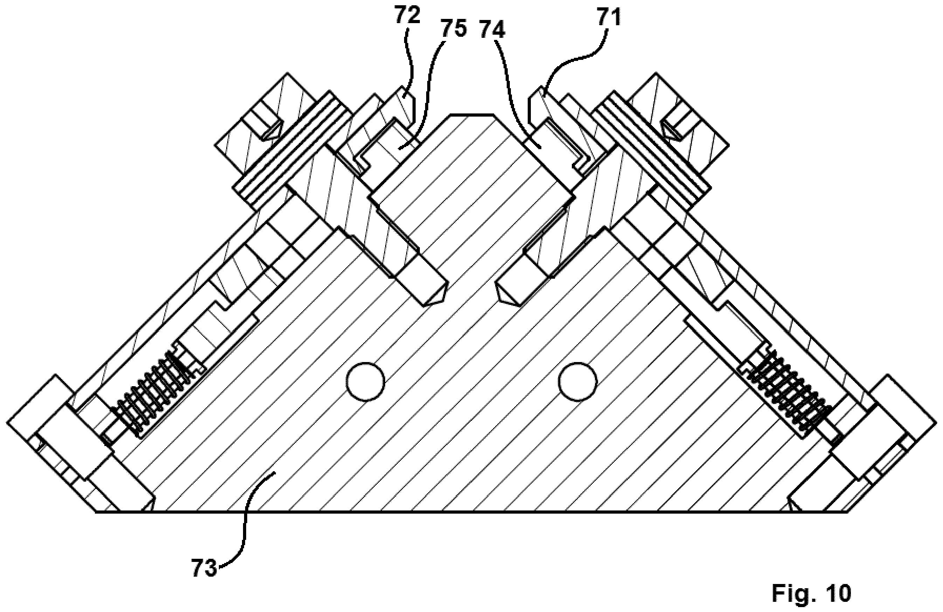

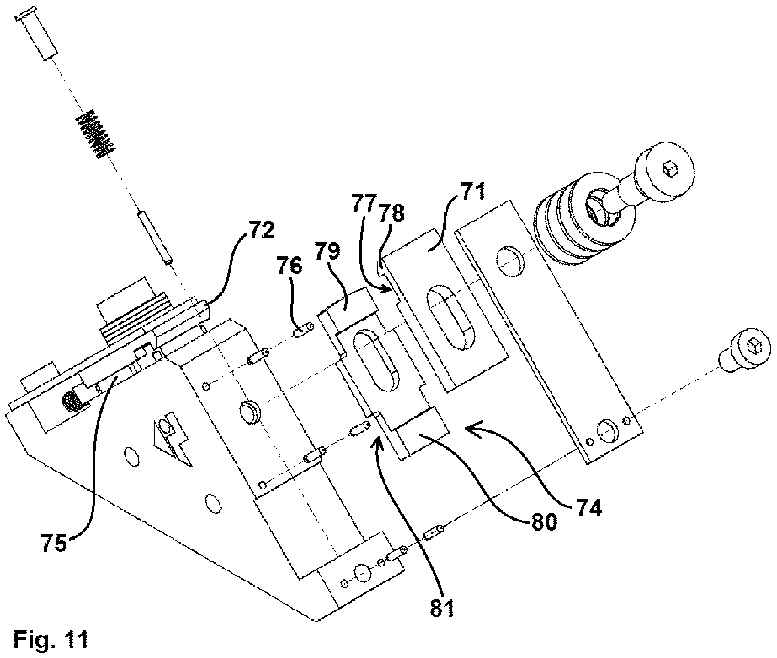

In den Figuren 9 bis 11 ist ein drittes Ausführungsbeispiel einer Vorrichtung 70 zur Werkstückzentrierung dargestellt. Sie unterscheidet sich von dem ersten Ausführungsbeispiel in der Form des ersten Stützelements 71, des zweiten Stützelements 72, des Stützkörpers 73, des ersten Schlittens 74, des zweiten Schlittens 75 und der Position der Führungsstifte 76 zur Führung der Translationsbewegung des ersten und zweiten Schlittens 74, 75. Alle übrigen Komponenten stimmen mit dem ersten Ausführungsbeispiel überein, weshalb diese in der Zeichnung nicht mit Bezugszahlen versehen und im folgenden nicht ausführlich erläutert sind. Hierzu wird auf die Zeichnungsbeschreibung zu den Figuren 2 bis 6 verwiesen. Das erste Stützelement 71 weist an der dem ersten Schlitten 74 zugewandten Seite eine zusätzliche Vertiefung 77 auf. Sie schließt sich unmittelbar an den Absatz 78 an, mit dem sich das erste Stützelement 71 an dem ersten Schlitten 74 abstützt. Der erste Schlitten 74 weist im Unterschied zu dem ersten Schlitten des ersten Ausführungsbeispiel an der dem ersten Stützelement 71 zugewandten Seite zwei Absätze 79, 80 auf, die in Richtung des ersten Stützelements 71 vorstehen. Im zusammengefügten Zustand liegt das erste Stützelement 71 auf dem ersten Schlitten 74 auf. Der erste Absatz 79 des ersten Schlittens 74 ist dann in der Vertiefung angeordnet. Die Ausdehnung des ersten Absatzes 79 in Längsrichtung des ersten Schlittens 74 ist kleiner als die Ausdehnung der Vertiefung in Längsrichtung des Schlittens 74 oder des ersten Stützelements 71. Zwischen dem ersten Absatz 79 und der Vertiefung besteht ausreichend Spiel, so dass die Rotation des ersten Stützelements 71 und dem ersten Schlitten 74 nicht behindert wird. Der zweite Absatz 80 des ersten Schlittens 74 schließt sich an die dem Absatz 78 angewandte Stirnseite des ersten Stützelements 71 an.

Der Stützkörper 73 ist im Unterschied zum ersten Ausführungsbeispiel an der oberen Seite abgeflacht und an seiner unteren Seite durchgängig ohne Einschnitt. In Übereinstimmung mit dem ersten Ausführungsbeispiel weist der Stützkörper 73 eine im wesentlichen dreieckige Form auf.

Im Unterschied zu dem ersten Ausführungsbeispiel sind bei dem dritten Ausführungsbeispiel vier Führungsstifte 76 zur Führung der Translationsbewegung des ersten Schlittens 74 vorgesehen. Die Position der Führungsstifte beeinflusst auch die Form des ersten Schlittens. An den Seiten des ersten Schlittens 74 sind Einschnitte 81 für die Führungsstifte vorgesehen. Sie sorgen für eine Führung entlang der Führungsstifte 76 bei einer Translationsbewegung des ersten Schlittens 74 und begrenzen den Verschiebeweg.

Das zweite Stützelement 72, der zweite Schlitten 75 und die zugehörigen Führungsstifte sind bei dem dritten Ausführungsbeispiel entsprechend zu dem ersten Stützelement 71, dem ersten Schlitten 74 und den zugehörigen Führungsstiften ausgebildet.

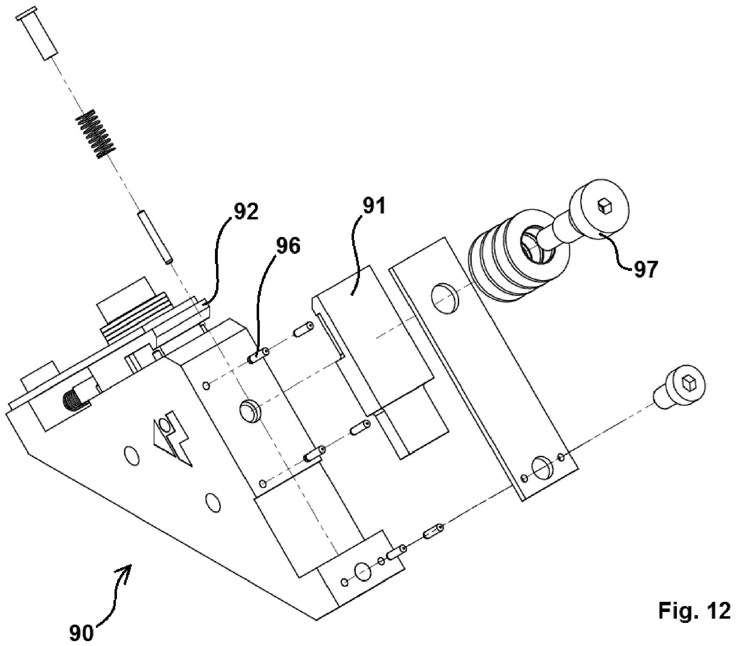

In Figur 12 ist ein viertes Ausführungsbeispiel einer Vorrichtung 90 zur Werkstückzentrierung dargestellt. Diese Vorrichtung stimmt im wesentlichen mit der Vorrichtung 70 des dritten Ausführungsbeispiels überein. Der einzige Unterschied besteht darin, dass bei dem dritten Ausführungsbeispiel das erste Stützelement 71 und der erste Schlitten 74 zwei separate Bauteile sind. Bei der Vorrichtung 90 des vierten Ausführungsbeispiels bilden das erste Stützelement 91 und der erste Schlitten ein einteiliges Bauteil. Der Schlitten ist somit Teil des ersten Stützelements 91. In diesem Fall führt das erste Stützelement 91 sowohl eine Translationsbewegung entlang der Führungsstifte 96 als auch eine Rotationsbewegung um die Schraube 97 aus. Damit die Rotationsbewegung nicht durch die Führungsstifte 96 beeinträchtigt wird, muss zwischen dem ersten Stützelement 91 und den Führungsstiften 96 ausreichend Spiel vorhanden sein. Für das zweite Stützelement 92 gilt entsprechendes. Es ist ebenfalls einteilig mit einem Schlitten ausgebildet.

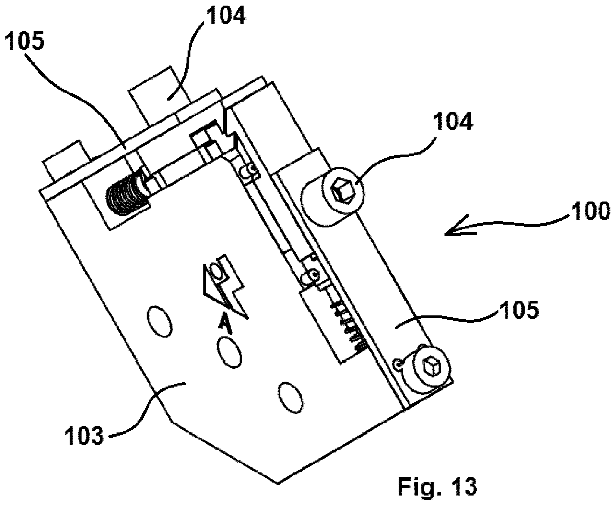

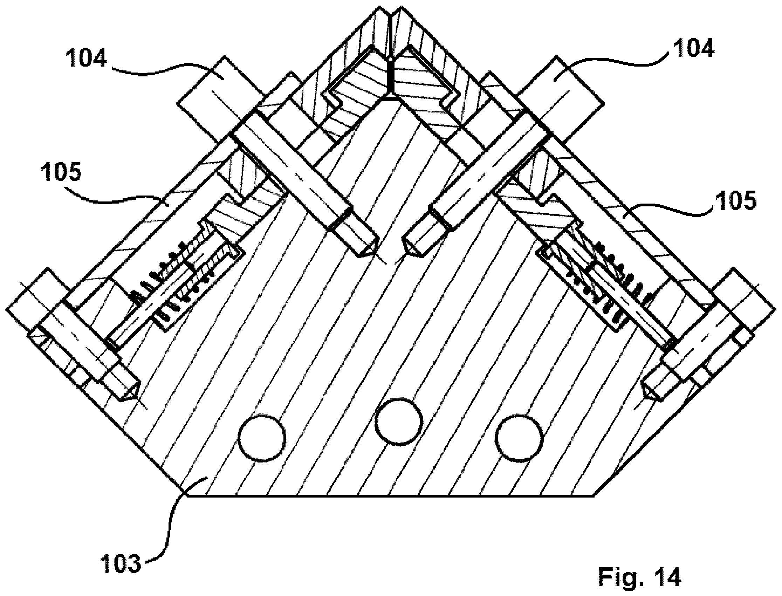

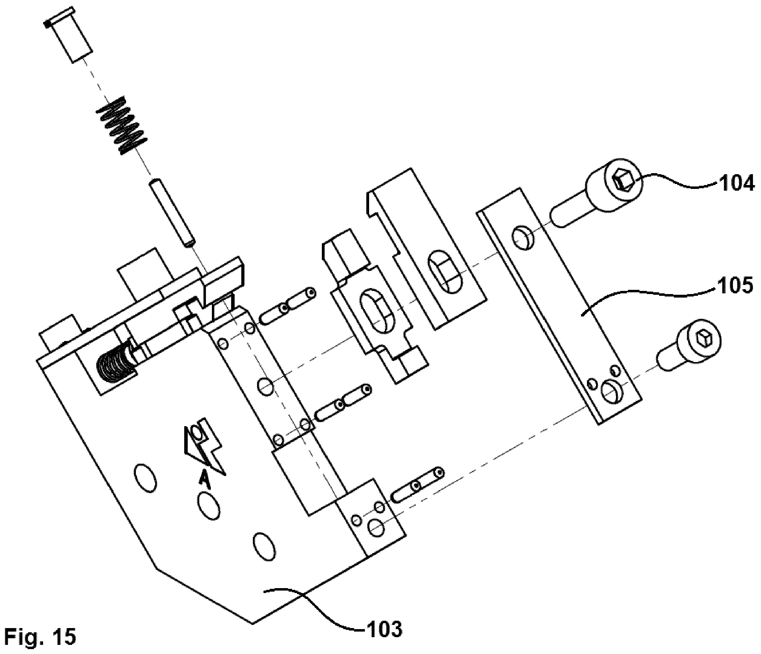

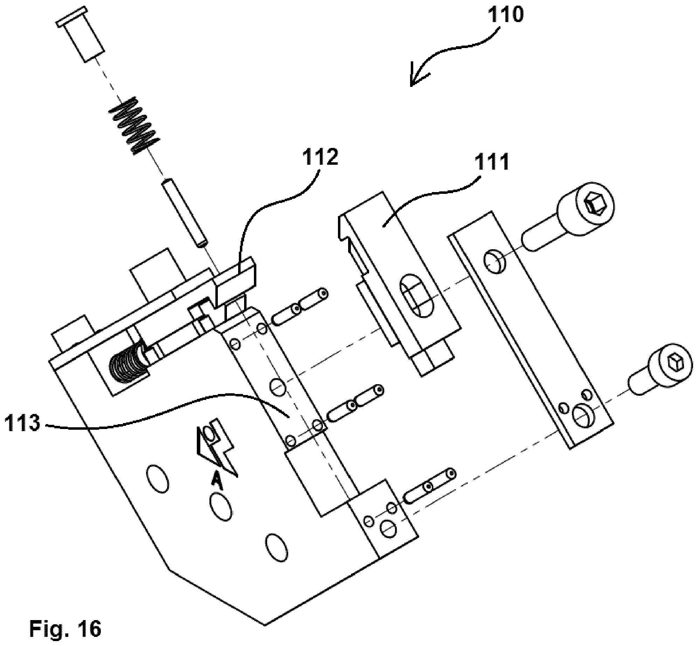

In den Figuren 13 bis 15 ist ein fünftes Ausführungsbeispiel einer Vorrichtung 100 zur Werkstückzentrierung dargestellt. Sie entspricht im wesentlichen der Vorrichtung 70 des dritten Ausführungsbeispiels. Von dieser Vorrichtung 70 unterscheidet sich die Vorrichtung 100 in der Form des Stützkörpers 103. Dieser weist eine im wesentlichen rechteckige Form mit einer Abschrägung an einer der Ecken auf. Ein weiterer Unterschied zu dem ersten und dritten Ausführungsbeispiel besteht darin, dass sich der Kopf der Schrauben 104 direkt an der Blattfeder 105 der Fixiereinrichtung abstützt und nicht über eine Feder. In Figur 16 ist ein sechstes Ausführungsbeispiel einer Vorrichtung 110 zur Werkstückzentrierung dargestellt. Sie entspricht der Vorrichtung 100 des fünften Ausführungsbeispiels mit der Ausnahme, dass das erste und zweite Stützelement 111 und 112 abschnittsweise als Schlitten ausgebildet sind, der auf den als schiefe Ebenen ausgebildeten Führungen 113 gleitet. In der Zeichnung ist nur die dem ersten Stützelement 111 zugeordnete Führung 113 erkennbar. Die dem zweiten Stützelement 112 zugeordnete Führung ist entsprechend ausgebildet. Während bei dem fünften Ausführungsbeispiel das erste Stützelement und der erste Schlitten zwei separate Bauteile sind, bilden bei dem sechsten Ausführungsbeispiel das erste Stützelement 111 und der erste Schlitten ein Bauteil. Entsprechendes gilt für das zweite Stützelement und 112.

### Bezugszahlen

- 1: Spindel
- 2: Werkstück
- 3: erste Vorrichtung zur Werkstückzentrierung
- 4: zweite Vorrichtung zur Werkstückzentrierung
- 5: dritte Vorrichtung zur Werkstückzentrierung
- 6: Spanneinrichtung
- 7: Stützkörper-Achse
- 8: Rotationsachse der Spindel
- 9: erstes Stützelement
- 9a: erster Stützabschnitt
- 10: zweites Stützelement
- 10a: zweiter Stützabschnitt
- 11: Stützkörper
- 12: erste Führung
- 13: zweite Führung
- 14: erster Schlitten
- 15: zweiter Schlitten
- 16: erste Fixiereinrichtung
- 17: zweite Fixiereinrichtung
- 18: Führungsstift
- 19: Feder
- 20: Feder
- 21: erster Absatz
- 21 a: zweiter Absatz
- 22: erste Werkstückanlegefläche
- 23: erste Verschieberichtung
- 23a: erste Drehachse
- 24: zweite Verschieberichtung
- 24a: zweite Drehachse
- 25 26: erste Schraube
- 26a: zweite Schraube
- 27: Gewindebohrung
- 28: Feder
- 29: Langloch
- 30: Langloch
- 31: Blattfeder
- 32: Schraube
- 33: Stift
- 34: Stift
- 35: Durchgangsöffnung
- 36: Schraubenkopf
- 37: Stift
- 38: Hülse
- 39: Hülsenkopf
- 40: zweite Werkstückanlegefläche
- 41 42 43 44: Werkstückpresselement
- 45: erstes Stützelement
- 46: zweites Stützelement
- 47: Stützkörper
- 48: erste Verschiebe-Richtung
- 48a: erste Drehachse
- 49: zweite Verschiebe-Richtung
- 49a: zweite Drehachse
- 50: erster Schlitten
- 51: zweiter Schlitten
- 52: erste Fixiereinrichtung
- 53: zweite Fixiereinrichtung
- 54: Feder
- 55: Feder
- 56: Blattfeder
- 57: Blattfeder
- 58: Schraube
- 59: Schraube
- 60: Werkstückaufnahmeteil
- 61: Vertiefung
- 62: Führungsbegrenzung
- 70: Vorrichtung zur Werkstückbegrenzung
- 71: erstes Stützelement
- 72: zweites Stützelement
- 73: Stützkörper
- 74: erster Schlitten
- 75: zweiter Schlitten
- 76: Führungsstift
- 77: Vertiefung
- 78: Absatz
- 79: Absatz
- 80: Absatz
- 90: Vorrichtung zur Werkstückzentrierung
- 91: erstes Stützelement
- 92: zweites Stützelement
- 96: Führungsstift
- 97: Schraube
- 100: Vorrichtung zur Werkstückzentrierung
- 103: Stützkörper
- 104: Schraube
- 105: Blattfeder
- 110: Vorrichtung zur Werkstückzentrierung
- 111: erstes Stützelement
- 112: zweites Stützelement
- 113: Führung

## Patentansprüche

1. Vorrichtung zur Werkstückzentrierung eines an einer Spindel (1) fixierten länglichen Werkstücks (2)
mit einem Stützkörper (11, 47, 73, 103), der entlang einer Stützkörper-Achse (7) linear verschiebbar ist, wobei der Stützkörper (11, 47, 73, 103) mit der Stützkörper-Achse(7) im wesentlichen parallel zu einer Rotationsachse (8) der Spindel (1) ausrichtbar ist,
mit einem ersten an dem Körper beweglich angeordneten Stützelement (9, 45, 71, 91, 111), welches das Werkstück (2) oder ein das Werkstück (2) aufnehmendes Werkstückaufnahmeteil (60) von einer ersten Seite abstützt,
mit einem zweiten an dem Körper beweglich angeordneten Stützelement (10, 46, 72, 92, 112), welches das Werkstück (2) oder ein das Werkstück (2) aufnehmendes Werkstückaufnahmeteil (60) von einer zweiten Seite abstützt,
wobei das erste Stützelement (9, 45, 71, 91, 111) in eine erste Verschiebe-Richtung (23, 48) linear verschiebbar und um eine erste Drehachse (23a, 48a) drehbar an dem Stützkörper (11, 47, 73, 103) angeordnet ist, wobei das zweite Stützelement (10, 46, 72, 92, 112) in eine von der ersten Verschiebe-Richtung (23, 48) verschiedenen zweiten Verschiebe-Richtung (24, 49) linear verschiebbar und um eine zweite Drehachse (24a, 49a) drehbar an dem Stützkörper (11, 47, 73, 103) angeordnet ist,
wobei das erste Stützelement (9, 45, 71, 91, 111) einen ersten länglichen Stützabschnitt (9a, 45a) aufweist, an welchem das Werkstück (2) oder ein das Werkstück (2) aufnehmendes Werkstückaufnahmeteil (60) anliegt, wobei das zweite Stützelement (10, 46, 72, 92, 112) einen zweiten länglichen Stützabschnitt (10a, 46a) aufweist, an welchem das Werkstück (2) oder ein das Werkstück aufnehmendes Werkstückaufnahmeteil (60) anliegt,
wobei in einer Ausgangsstellung des ersten Stützelements (9, 45, 71, 91, 111) und des zweiten Stützelements (10, 46, 72, 92, 112) der erste Stützabschnitt (9a, 45a) und der zweite Stützabschnitt (10a, 46a) in ihrer Längsrichtung parallel zueinander und parallel zu der Stützkörper-Achse(7) des Stützkörpers (11, 47, 73, 103) ausrichtbar sind,
**dadurch gekennzeichnet,**
**dass** der Winkel zwischen der ersten Drehachse (23a, 48a) und der Stützkörper-Achse (7) größer als 0° und kleiner als 180° ist,
**dass** der Winkel zwischen der zweiten Drehachse (24a, 49a) und der Stützkörper-Achse (7) größer als 0° und kleiner als 180° ist.

2. Vorrichtung nach Anspruch 1, **dadurch gekennzeichnet, dass** das erste Stützelement (9, 45) eine im wesentlichen ebene erste Werkstückanlegefläche (22) aufweist, dass das zweite Stützelement (10, 46) eine im wesentlichen ebene zweite Werkstückanlegefläche (40) aufweist, und dass der Winkel zwischen der ersten Werkstückanlegefläche (22) und der zweiten Werkstückanlegefläche (40) größer als 0° und kleiner als 180° ist.

3. Vorrichtung nach Anspruch 1 oder 2, **dadurch gekennzeichnet, dass** der Stützkörper (11, 47, 73, 103) eine erste Führung (12, 113) aufweist, an der das erste Stützelement (9, 45, 71, 91, 111) in die erste Verschiebe-Richtung (23, 48) verschiebbar ist.

4. Vorrichtung nach einem der vorhergehenden Ansprüche, **dadurch gekennzeichnet, dass** der Stützkörper (11, 47, 73, 103) eine zweite Führung (13) aufweist, an der das zweite Stützelement (10, 46, 72, 92, 112) in die zweite Verschiebe-Richtung (24, 49) verschiebbar ist.

5. Vorrichtung nach einem der vorhergehenden Ansprüche, **dadurch gekennzeichnet, dass** die erste Drehachse (23a, 48a) im wesentlichen senkrecht zu der ersten Verschiebe-Richtung (23, 48) ist.

6. Vorrichtung nach einem der vorhergehenden Ansprüche, **dadurch gekennzeichnet, dass** die zweite Drehachse (24a, 49a) im wesentlichen senkrecht der zweiten Verschiebe-Richtung (24, 49) ist.

7. Vorrichtung nach einem der vorhergehenden Ansprüche, **dadurch gekennzeichnet, dass** ein erster Schlitten (14, 50, 74) vorgesehen ist, der an einer ersten Führung (12) in die erste Verschiebe-Richtung (23, 48) verschiebbar angeordnet ist, und dass das erste Stützelement (9, 45, 71) gegenüber dem ersten Schlitten (14, 50, 74) um die erste Drehachse (23a, 48a) drehbar ist.

8. Vorrichtung nach einem der vorhergehenden Ansprüche, **dadurch gekennzeichnet, dass** ein zweiter Schlitten (15, 51, 75) vorgesehen ist, der an einer zweiten Führung (13) in die zweite Verschiebe-Richtung (24, 49) verschiebbar angeordnet ist, und dass das zweite Stützelement (10, 46, 72) gegenüber dem zweiten Schlitten (15, 51, 75) um die zweite Drehachse (24a, 49a) drehbar ist.

9. Vorrichtung nach Anspruch 7 oder 8, **dadurch gekennzeichnet, dass** mindestens eines der beiden Stützelemente (9, 10, 71, 72) einen Absatz (21, 78) aufweist, mit dem es sich an dem ihm zugeordneten Schlitten (14, 15, 74, 75) abstützt.

10. Vorrichtung nach einem der vorhergehenden Ansprüche, **dadurch gekennzeichnet, dass** mindestens eine der beiden Führungen (12, 13, 113) an einem Ende mit einer Führungsbegrenzung (62) ausgestattet ist, dass an der Führungsbegrenzung (62) eine Feder (19, 20, 54, 55) angeordnet ist, und dass sich der an der Führung (12, 13, 48, 49, 113) angeordnete Schlitten (14, 15, 50, 51, 74, 75) an der Feder (19, 20, 54, 55) abstützt.

11. Vorrichtung nach einem der vorhergehenden Ansprüche, **dadurch gekennzeichnet, dass** der Stützkörper (11, 47, 73, 103) mit mindestens einer Fixiereinrichtung (16, 17, 52, 53) ausgestattet ist, mit der mindestens eines der beiden Stützelemente (9, 10, 45, 46, 71, 72, 91, 92, 111, 112) an dem Stützkörper (11, 47, 73, 103) in einer Position fixierbar ist.

12. Vorrichtung nach Anspruch 11, **dadurch gekennzeichnet, dass** die Fixiereinrichtung (16, 17) eine Klemmeinrichtung ist, welche das Stützelement (9, 10, 45, 46, 71, 72, 91, 92, 111, 112) in der fixierten Stellung gegen den Stützkörper (11, 47, 73, 103) drückt.

13. Vorrichtung nach einem der vorhergehenden Ansprüche, **dadurch gekennzeichnet, dass** sie mit einem Werkstückaufnahmeteil (60) ausgestattet ist, welches an dem ersten und zweiten Stützelement (45, 46) anliegt, und dass das Werkstückaufnahmeteil (60) eine Vertiefung (61) für das Werkstück (2) aufweist.

14. Vorrichtung nach Anspruch 11 oder 12 und nach Anspruch 13, **dadurch gekennzeichnet, dass** die Fixiereinrichtung (52, 53) einen das Werkstückaufnahmeteil (60) gegen das erste und/ oder zweite Stützelement (45, 46) drückenden Abschnitt aufweist.

15. Vorrichtung nach einem der vorhergehenden Ansprüche, **dadurch gekennzeichnet, dass** sie ein Werkstückpresselement (44) aufweist, welches auf ein an dem ersten und zweiten Stützelement (9, 10, 45, 46) anliegendes Werkstück (2) eine Kraft ausübt und das Werkstück (2) einspannt.

16. Vorrichtung nach einem der vorhergehenden Ansprüche, **dadurch gekennzeichnet, dass** die erste Verschiebe-Richtung (23, 48) und die erste Drehachse (23a, 48a) in einer ersten Ebene verlaufen, die senkrecht zu der Stützkörper-Achse (7) ist,
dass die zweite Verschiebe-Richtung (24, 49) und die zweite Drehachse (24a, 49a) in einer zweiten Ebene verlaufen, die senkrecht zu der Stützkörper-Achse (7) ist, wobei die erste und zweite Ebene identisch oder parallel sind,
dass die erste Drehachse (23a, 48a) im wesentlichen senkrecht zu der ersten Verschiebe-Richtung (23, 48) ist,
dass die zweite Drehachse (24a, 49a) im wesentlichen senkrecht zu der zweiten Verschiebe-Richtung (24, 49) ist.

## Claims

1. Device for workpiece centring of a longitudinal workpiece (2) fixed on a spindle (1)
with a support body (11, 47, 73, 103) which can be linearly displaced along a support body axis (7), wherein the support body (11, 47, 73, 103) and the support body axis (7) can be aligned substantially parallel to an axis of rotation (8) of the spindle (1),
with a first support element (9, 45, 71, 91, 111), which is displaceably arranged on the body and which supports the workpiece (2) or a workpiece receiving part (60) from a first side wherein the workpiece receiving part receives the workpiece (2),
with a second support element (10, 46, 72, 92, 112), which is displaceably arranged on the body and which supports the workpiece (2) or a workpiece receiving part (60) from a second side,
wherein the first support element (9, 45, 71, 91, 111) is linearly displaceable in a first direction of displacement (23, 48) and rotatable about a first axis of rotation (23a, 48a) on the support body (11, 47, 73, 103),
wherein the second support element (10, 46, 72, 92, 112) is linearly displaceable in a second direction of displacement (24, 49), which is different from the first direction of displacement (23, 48), and rotatable about a second axis of rotation (24a, 49a) on the support body (11, 47, 73, 103),
wherein the first support element (9, 45, 71, 91, 111) exhibits a first elongated support section (9a, 45a), on which the workpiece (2) or a workpiece receiving part (60) that receives the workpiece (2) rests, wherein the second support element (10, 46, 72, 92, 112) exhibits a second elongated support section (10a, 46a), on which the workpiece (2) or a workpiece receiving part (60) that receives the workpiece (2) rests, wherein in a starting position of the first support element (9, 45, 71, 91, 111) and the second support element (10, 46, 72, 92, 112) the first support section (9a, 45a) and the second support section (10a, 46a) can be aligned parallel to each other and parallel to the support body axis (7) of the support body (11, 47, 73, 103) in their longitudinal direction **characterized in**
**that** the angle between the first axis of rotation (23a, 48a) and the support body axis (7) is greater than 0° and smaller than 180°,
**that** the angle between the second axis of rotation (24a, 49a) and the support body axis (7) is greater than 0° and smaller than 180°.

2. Device according to claim 1, **characterised in that** the first support element (9, 45) exhibits a substantially level first workpiece contact surface (22), that the second support element (10, 46) exhibits a substantially level second workpiece contact surface (40) and that the angle between the first workpiece contact surface (22) and the second workpiece contact surface (40) is greater than 0° and smaller than 180°.

3. Device according to claim 1 or 2, **characterised in that** the support body (11, 47, 73, 103) exhibits a first guide (12, 113) on which the first support element (9, 45, 71, 91, 111) is displaceable in the first direction of displacement (23, 48).

4. Device according to one of the previous claims, **characterised in that** the support body (11, 47, 73, 103) exhibits a second guide (13) on which the second support element (10, 46, 72, 92, 112) is displaceable in the second direction of displacement (24, 49).

5. Device according to one of the previous claims, **characterised in that** the first axis of rotation (23a, 48a) is substantially perpendicular to the first direction of displacement (23, 48).

6. Device according to one of the previous claims, **characterised in that** the second axis of rotation (24a, 49a) is substantially perpendicular to the second direction of displacement (24, 49).

7. Device according to one of the previous claims, **characterised in that** a first carriage (14, 50, 74) is provided which is arranged displaceably on a first guide (12) in the first direction of displacement (23, 48), and that the first support element (9, 45, 71) is rotatable relative to the first carriage (14, 50, 74) about the first axis of rotation (23a, 48a).

8. Device according to one of the previous claims, **characterised in that** a second carriage (15, 51, 75) is provided which is arranged displaceably on a second guide (13) in the second direction of displacement (24, 49), and that the second support element (10, 46, 72) is rotatable relative to the second carriage (15, 51, 75) about the second axis of rotation (24a, 49a).

9. Device according to claim 7 or 8, **characterised in that** at least one of the two support elements (9, 10, 71, 72) exhibits a shoulder (21, 78), with which it is supported on its designated carriage (14, 15, 74, 75).

10. Device according to one of the previous claims, **characterised in that** at least one of the two guides (12, 13, 113) is equipped with a guide stop (62) at one end, that a spring (19, 20, 54, 55) is arranged at the guide stop (62), and that the carriage (14, 15, 50, 51, 74, 75) arranged at the guide (12, 13, 48, 49, 113) is supported on the spring (19, 20, 54, 55).

11. Device according to one of the previous claims, **characterised in that** the support body (11, 47, 73, 103) is equipped with at least one locating device (16, 17, 52, 53) with which at least one of the two support elements (9, 10, 45, 46, 71, 72, 91, 92, 111, 112) can be fixed in a position at the support body (11, 47, 73, 103).

12. Device according to claim 11, **characterised in that** the locating device (16, 17) is a clamping device which presses the support element (9, 10, 45, 46, 71, 72, 91, 92, 111, 112) against the support body (11, 47, 73, 103) in the fixed position.

13. Device according to one of the previous claims, **characterised in that** it is equipped with a workpiece receiving part (60), which rests on the first and second support element (45, 46), and that the workpiece receiving part (60) exhibits a recess (61) for the workpiece (2).

14. Device according to claim 11 or 12 and according to claim 13, **characterised in that** the locating device (52, 53) exhibits a section which presses the workpiece receiving part (60) against the first and/or second support element (45, 46).

15. Device according to one of the previous claims, **characterised in that** it exhibits a workpiece pressing element (44) which exerts a force on a workpiece (2) resting on the first and second support element (9, 10, 45, 46) to clamp the workpiece (2).

16. Device according to one of the previous claims, **characterised in that** the first direction of displacement (23, 48) and the first axis of rotation (23a, 48a) run in a first plane that is perpendicular to the support body axis (7), that the second direction of displacement (24, 49) and the second axis of rotation (24a, 49a) run in a second plane that is perpendicular to the support body axis (7), wherein the first and second planes are identical or parallel,
that the first axis of rotation (23a, 48a) is substantially perpendicular to the first direction of displacement (23, 48),
that the second axis of rotation (24a, 49a) is substantially perpendicular to the second direction of displacement (24, 49).

## Revendications

1. Dispositif de centrage d'une pièce (2) de forme allongée fixée sur une broche (1)
avec un corps-support (11, 47, 73, 103) pouvant être déplacé linéairement le long d'un axe de corps-support (7), le corps-support (11, 47, 73, 103) et l'axe de corps-support (7) étant ajustables de manière essentiellement parallèle à l'axe de rotation (8) de la broche (1),
avec un premier élément d'appui (9, 45, 71, 91, 111) disposé de façon mobile sur le corps et supportant d'un premier côté la pièce (2) ou un porte-pièce (60) sur lequel est monté la pièce (2),
avec un second élément d'appui (10, 46, 72, 92, 112) disposé de façon mobile sur le corps et supportant d'un second côté la pièce (2) ou un porte-pièce (60) sur lequel est monté la pièce (2),
le premier élément d'appui (9, 45, 71, 91, 111) étant disposé sur le corps-support (11, 47, 73, 103) de manière à pouvoir être déplacé linéairement dans un premier sens de déplacement (23, 48) et à pouvoir pivoter autour d'un premier axe de rotation (23a, 48a),
le second élément d'appui (10, 46, 72, 92, 112) étant disposé sur le corps-support (11, 47, 73, 103) de manière à pouvoir être déplacé linéairement dans un second sens de déplacement (24, 49) différent du premier sens de déplacement (23, 48) et à pouvoir tourner autour d'un second axe de rotation (24a, 49a),
le premier élément d'appui (9, 45, 71, 91, 111) présentant une première partie d'appui (9a, 45a) de forme allongée sur laquelle repose la pièce (2) ou un porte-pièce (60) sur lequel est monté la pièce (2),
le second élément d'appui (10, 46, 72, 92, 112) présentant une seconde partie d'appui (10a, 46a) de forme allongée sur laquelle repose la pièce (2) ou un porte-pièce (60) sur lequel est montée la pièce,
la première partie d'appui (9a, 45a) et la seconde partie d'appui (10a, 46a) pouvant, dans une position initiale du premier élément d'appui (9, 45, 71, 91, 111) et du second élément d'appui (10, 46, 72, 92, 112), être ajustées parallèlement l'une à l'autre dans leur sens longitudinal et parallèlement à l'axe de corps-support (7) du corps-support (11, 47, 73, 103), **caractérisé en ce que**,
l'angle entre le premier axe de rotation (23a, 48a) et l'axe de corps-support (7) est supérieur à 0° et inférieur à 180°,
l'angle entre le second axe de rotation (24a, 49a) et l'axe de corps-support (7) est supérieur à 0° et inférieur à 180°.

2. Dispositif selon la revendication 1, **caractérisé en ce que** le premier élément d'appui (9, 45) présente une première face d'appui de pièce (22) essentiellement plane, que le second élément d'appui (10, 46) présente une seconde face d'appui de pièce (40) essentiellement plane et que l'angle entre la première face d'appui de pièce (22) et la seconde face d'appui de pièce (40) est supérieur à 0° et inférieur à 180°.

3. Dispositif selon la revendication 1 ou 2, **caractérisé en ce que** le corps-support (11, 47, 73, 103) présente un premier guidage (12, 113) sur lequel le premier élément d'appui (9, 45, 71, 91, 111) peut être déplacé dans le premier sens de déplacement (23, 48).

4. Dispositif selon l'une quelconque des revendications précédentes, **caractérisé en ce que** le corps-support (11, 47, 73, 103) présente un second guidage (13) sur lequel le second élément d'appui (10, 46, 72, 92, 112) peut être déplacé dans le second sens de déplacement (24, 49).

5. Dispositif selon l'une quelconque des revendications précédentes, **caractérisé en ce que** le premier axe de rotation (23a, 48a) est essentiellement perpendiculaire au premier sens de déplacement (23, 48).

6. Dispositif selon l'une quelconque des revendications précédentes, **caractérisé en ce que** le second axe de rotation (24a, 49a) est essentiellement perpendiculaire au second sens de déplacement (24, 49).

7. Dispositif selon l'une quelconque des revendications précédentes, **caractérisé en ce qu'**un premier coulisseau (14, 50, 74) est prévu, ledit coulisseau étant disposé sur un premier guidage (12) de manière à pouvoir être déplacé dans le premier sens de déplacement (23, 48), et **en ce que** le premier élément d'appui (9, 45, 71) peut pivoter par rapport au premier coulisseau (14, 50, 74) autour du premier axe de rotation (23a, 48a).

8. Dispositif selon l'une quelconque des revendications précédentes, **caractérisé en ce qu'**un second coulisseau (15, 51, 75) est prévu, ledit coulisseau étant disposé sur un second guidage (13) de manière à pouvoir être déplacé dans le second sens de déplacement (24, 49), et **en ce que** le second élément d'appui (10, 46, 72) peut pivoter par rapport au second coulisseau (15, 51, 75) autour du second axe de rotation (24a, 49a).

9. Dispositif selon la revendication 7 ou 8, **caractérisé en ce qu'**au moins un des deux éléments d'appui (9, 10, 71, 72) présente un épaulement (21, 78) au moyen duquel il prend appui sur le coulisseau (14, 15, 74, 75) qui lui est associé.

10. Dispositif selon l'une quelconque des revendications précédentes, **caractérisé en ce qu'**au moins un des deux guidages (12, 13, 113) est doté à une extrémité d'une butée de guidage (62), qu'un ressort (19, 20, 54, 55) est disposé au niveau de la butée de guidage (62) et que le coulisseau (14, 15, 50, 51, 74, 75) disposé au niveau du guidage (12, 13, 48, 49, 113) prend appui sur le ressort (19, 20, 54, 55).

11. Dispositif selon l'une quelconque des revendications précédentes, **caractérisé en ce que** le corps-support (11, 47, 73, 103) est doté d'au moins un dispositif de fixation (16, 17, 52, 53) permettant de fixer dans une position au moins un des deux éléments d'appui (9, 10, 45, 46, 71, 72, 91, 92, 111, 112) sur le corps-support (11, 47, 73, 103).

12. Dispositif selon la revendication 11, **caractérisé en ce que** le dispositif de fixation (16, 17) est un dispositif de serrage qui presse l'élément d'appui (9, 10, 45, 46, 71, 72, 91, 92, 111, 112) contre le corps-support (11, 47, 73, 103) dans la position fixée.

13. Dispositif selon l'une quelconque des revendications précédentes, **caractérisé en ce qu'**il est équipé d'un porte-pièce (60) qui repose sur le premier et le second élément d'appui (45, 46) et que le porte-pièce (60) présente un creux (61) destiné à recevoir la pièce (2).

14. Dispositif selon la revendication 11 ou 12 et selon la revendication 13, **caractérisé en ce que** le dispositif de fixation (52, 53) présente une partie qui presse le porte-pièce (60) contre le premier et/ou le second élément d'appui (45, 46).

15. Dispositif selon l'une quelconque des revendications précédentes, **caractérisé en ce qu'**il présente un presse-pièce (44) qui exerce une force sur une pièce (2) reposant sur le premier et le second élément d'appui (9, 10, 45, 46) et serre ainsi la pièce (2).

16. Dispositif selon l'une quelconque des revendications précédentes, **caractérisé en ce que** le premier sens de déplacement (23, 48) et le premier axe de rotation (23a, 48a) s'étendent dans un premier plan qui est perpendiculaire à l'axe de corps-support (7),
que le second sens de déplacement (24, 49) et le second axe de rotation (24a, 49a) s'étendent dans un second plan qui est perpendiculaire à l'axe de corps-support (7), lesdits premier et second plans étant identiques ou parallèles,
que le premier axe de rotation (23a, 48a) est essentiellement perpendiculaire au premier sens de déplacement (23, 48),
que le second axe de rotation (24a, 49a) est essentiellement perpendiculaire au second sens de déplacement (24, 49).
